# EUROPÄISCHE PATENTSCHRIFT

(11) **EP 4 165 329 B1**
(45) Veröffentlichungstag und Bekanntmachung des Hinweises auf die Patenterteilung: **29.05.2024**
(21) Anmeldenummer: 21734067.8
(22) Anmeldetag: 14.06.2021
(51) Int. Cl.: F16K 1/44

(54) **DOPPELSITZVENTIL**
DOUBLE SEAT VALVE
SOUPAPE À DOUBLE SIÈGE

(30) Priorität: 16.06.2020 DE 102020003565
(43) Veröffentlichungstag der Anmeldung: 19.04.2023
(73) Patentinhaber: GEA Tuchenhagen GmbH, 21514 Büchen (DE)
(72) Erfinder: BURMESTER, Jens, 23883 Grambek (DE)
(74) Vertreter: Hauck Patentanwaltspartnerschaft mbB
(86) Internationale Anmeldenummer: PCT/EP2021/065937
(87) Internationale Veröffentlichungsnummer: WO 2021/254952

(56) Entgegenhaltungen:
- WO-A1-2009/056277
- WO-A1-2009/115255
- DE-A1- 19 652 215

## Beschreibung

Die Erfindung betrifft ein Doppelsitzventil nach dem Oberbegriff des ersten Anspruchs.

Ventile der gattungsgemäßen Art werden in Anlagen zur Herstellung von Lebensmitteln, Getränken, Medikamenten und feinchemischen Produkten sowie in der Biotechnologie eingesetzt.

Diese Anwendungen bedingen eine hygienische Gestaltung des Doppelsitzventiles. Davon sind auch jene Stellen betroffen, an denen Stangen, mit welchen die Schließkörper im Innenraum des Doppelsitzventils verstellbar sind, den unmittelbar produktführenden Innenraum verlassen. An einer solchen Stelle kann eine auf der Stange gleitende Dichtung vorgesehen sein. Es ist sinnvoll, diese Dichtung reinigbar auszuführen.

Im Stand der Technik zeigen WO 2009/115255 A1 und EP 0 646 741 B1 Anordnungen, durch die die Dichtung in einem Reinigungsschritt zur Reinigung freilegbar ist. Beide Dokumente zeigen solche Anordnungen, die EP 0 646 741 B1 zeigt zusätzlich eine Reinigung der antriebsseitigen Dichtung, welche auf einem Schließkörperabschnitt gleitend ausgeführt ist. Ein noch älteres Dokument ist die DE 41 18 874 A1, die ebenfalls eine Reinigung der antriebsseitigen Dichtung zeigt.

Aus WO 2009/056277 A1 ist ein sitzreinigungsfähiges Doppelsitzventil mit zwei seriell angeordneten, relativ zueinander bewegbaren Schließgliedern bekannt. Dabei sind zwei Schließglieder unabhängig voneinander durch einen Teilhub jeweils spaltweit in eine Sitzreinigungsstellung zwecks Spülung ihrer Sitzflächen überführbar. Das Doppelsitzventil öffnet nach unten und bei nach oben mit einem ersten Teilhub in die Sitzreinigungsstellung unter Bildung eines ersten Ringspalts bewegtem ersten Schließglied ist eine Abdichtungsstelle an einer ersten Durchführung zwischen der das erste Schließglied bewegenden ersten Ventilstange und dem zugeordneten ersten Ventilgehäuseteil in Form eines zweiten Ringspaltes geöffnet, wobei der zweite Ringspalt den Innenraum des ersten Ventilgehäuseteils mit einer Spülkammer einer ersten Spüleinrichtung verbindet, die die erste Ventilstange umschließt.

Aus DE 196 52 215 A1 sind weiterhin ein Verfahren zum Reinigen eines leckagefrei schaltenden Absperrventils und ein Absperrventil zur Durchführung des Verfahrens bekannt. Das Absperrventil weist schieberartig ausgeführte Schließglieder auf, die in einer Schließstellung zwischen sich einen Leckagehohlraum einschließen, der ins Freie führt. Mit einem Teilhub des unteren Schließgliedes nach unten wird eine Dichtung des Schließgliedes freigelegt und die Dichtung sowie der Ventilsitz von einem Teilstrom aus dem Reinigungsmittelstrom des Ventilgehäuseunterteils bespült, der über den Leckagehohlraum frei in die Leckageableitung geführt wird.

Es war nun Aufgabe der Erfindung, die hygienischen Verhältnisse im Bereich des Schließkörperabschnitts zu verbessern.

Gelöst wird diese Aufgabe durch ein Doppelsitzventil mit den Merkmalen des ersten Anspruchs.

Vorgestellt wird ein Doppelsitzventil mit einem Gehäuse, mit einem ersten Innenraum und einem zweiten Innenraum, einem die Innenräume verbindenden Durchlass, in welchem ein erster Ventilsitz und ein zweiter Ventilsitz angeordnet sind, einem einen Hohlraum aufweisenden ersten Schließkörper, welcher an einer Stange befestigt ist, und mit einem zweiten Schließkörper, welcher von der Stange durchsetzt ist, und welcher mit dem ersten Schließkörper in dichtenden Kontakt bringbar ist, in welchem Kontakt der Hohlraum gegen den zweiten Innenraum abgedichtet ist, und mit einem Schließkörperabschnitt, welcher am zweiten Schließkörper angeordnet ist und mit einer im Gehäuse aufgenommenen Dichtung zusammenwirkt. Dieses Doppelsitzventil umfasst einen Spülraum und eine mit dem Spülraum zusammenwirkende Hygienestruktur. Der zweite Schließkörper ist in einer Stellung bringbar, in welcher der Schließkörperabschnitt aus dem zweiten Innenraum in den Spülraum zurückgezogen und die Dichtung freigelegt ist.

Spülraum bezeichnet einen Hohlraum im Doppelsitzventil, in dem eine Strömung eines Reinigungsmittels, in der Regel einer Reinigungsflüssigkeit, ausprägbar ist, welche Wandungen des Spülraums und Oberflächen von Objekten im Spülraum reinigt.

Erster Schließkörper und Stange können einstückig ausgeführt sein.

Hygienestruktur bezeichnet ein formgebendes Element von oder an dem Schließkörperabschnitt und Wandung des Spülraums, welches eine Strömung einer Reinigungsflüssigkeit leitet, beschleunigt oder umlenkt.

Die Hygienestruktur kann vorteilhaft weiterhin wenigstens eines umfassen von einem Sprühdüsenkörper und einer Abdrehung am Schließkörperabschnitt. Die Abdrehung ist vorteilhaft an ein dem zweiten Innenraum zugewandten Ende einer Gleitfläche des Schließkörperabschnitts, auf welcher die Dichtung gleitet, anschließend vorgesehen. Die Gleitfläche kann vorzugsweise zylindrisch ausgeformt sein, um eine gleichmäßige Dichtwirkung in unterschiedlichen Stellungen von Dichtung und Gleitfläche zu bewirken. Dichtung und Gleitfläche stehen in gleitendem und dichtendem Kontakt, wobei dieser Kontakt in einigen Ventilstellungen, beispielsweise einer Reinigungsstellung, gelöst sein kann.

Die Hygienestruktur umfasst eine Kontur des Schließkörperabschnitts. Die Kontur ist vorteilhaft so ausgeführt, dass an den zylindrischen Abschnitt der Gleitfläche unmittelbar eine Schräge anschließt, die trichterartig wirkt und von der Gleitfläche kommende Flüssigkeit zu einem Ablauf leitet. Dieser Ablauf kann zwischen der Stange und dem zweiten Schließkörper ausgebildet sein.

In einer Weiterbildung ist die Abdrehung am Schließkörperabschnitt angeordnet, schließt in Richtung des zweiten Innenraums an die Gleitfläche an und bildet mit der Dichtung in einer Reinigungsstellung des Schließkörperabschnitts einen Spalt aus.

Der Spalt erzeugt eine Strömung der Reinigungsflüssigkeit, die die Dichtung und die Gleitfläche gründlich reinigt und so die hygienischen Verhältnisse in diesem Bereich verbessert.

In einer Weiterbildung ist ein Gehäusedeckel vorgesehen. Der Gehäusedeckel trennt den zweiten Innenraum von der Umgebung des Doppelsitzventils ab. Im Gehäusedeckel ist ein Spülraum ausgeformt, in welchem der Schließkörperabschnitt bei gleichzeitigem Freilegen der Dichtung aufnehmbar ist. Diese Gestaltung verbessert die hygienischen Verhältnisse, da der Schließkörperabschnitt großflächig reinigbar ist.

Der Spülraum ist insbesondere ein zur Aufnahme des Schließkörperabschnitts angepasster Hohlraum. Die kann vorteilhaft eine Ausnehmung in einem Gehäusedeckel sein, die beispielsweise topfförmig oder schalenförmig gestaltet ist. Der Spülraum ist nur in einem Teil der Stellungen des Ventils von Offenstellung, Schließstellung und Reinigungsstellung mit dem Schließkörperabschnitt ganz oder teilweise gefüllt. Die Wandung des Spülraums kann der Kontur der Schließkörperabschnitts folgend ausgeführt sein, wobei ein Abstand von Wandung zur Kontur je nach Stellung des Ventils unterschiedlich ist.

Diese Reinigbarkeit wird weiter verbessert, indem der Spülraum ausreichende Abmessungen besitzt, den Schließkörperabschnitt vollständig aufzunehmen und unter Bildung von wenigstens einem Spalt zu umschließen. Nur noch eine dem zweiten Innenraum zugewandte Seite des Schließkörperabschnitts liegt in Richtung des Innenraums frei, der Rest des Schließkörperabschnitts ist vom Spülraum umschlossen.

Eine andere Weiterbildung bezieht sich auf den Sprühdüsenkörper. Es baulich einfach und für die Benetzung des Schließkörperabschnitts, insbesondere der Schrägen, vorteilhaft, den Sprühdüsenkörper im Spülraum die Hohlstange umgebend anzuordnen.

Um die Reinigbarkeit des Schließkörperabschnitts auch in Richtung des zweiten Innenraums zu verbessern, ist gemäß einer Weiterbildung vorgesehen, dass eine Flächennormale einer Unterseite des Schließkörperabschnitts um wenige Grad zur Hubrichtung geneigt ist, so dass sich ein Konus ergibt, entlang dessen Oberfläche Flüssigkeit zur Mitte hin abläuft.

Das mit den vorstehend beschriebenen Merkmalen gestaltete Doppelsitzventil besitzt verbesserte hygienische Eigenschaften am Schließkörperabschnitt, da dieser in der in den Spülraum zurückgezogenen Stellung von Reinigungsflüssigkeit umspülbar ist, wobei gleichzeitig auch die Dichtung gereinigt wird.

Anhand eines Ausführungsbeispiels und seiner Weiterbildungen soll die Erfindung näher erläutert werden. Zudem soll die Darstellung der Vorteile vertieft werden.

Es zeigen:
- **Fig.** 1:: Doppelsitzventil in geschlossener Stellung;
- Fig. 2:: Doppelsitzventil, bei dem der Schließkörperabschnitt in Reinigungsstellung steht.

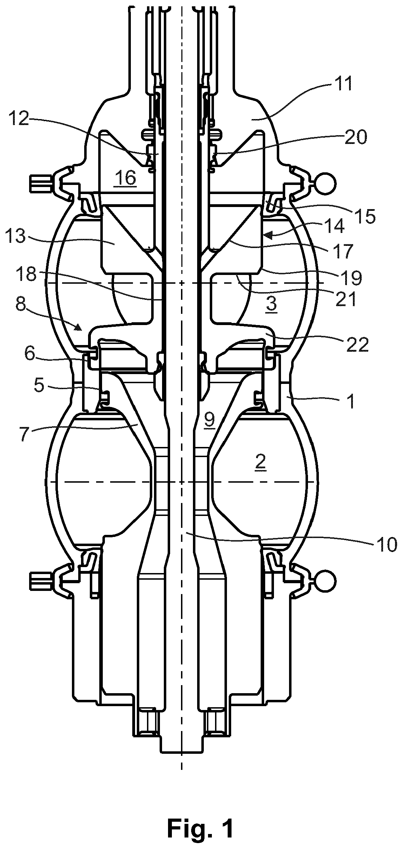

In Fig. 1 ist ein Doppelsitzventil für hygienische Anwendungen und in einer dafür gedachten hygienischen Gestaltung gezeigt.

Das Doppelsitzventil besitzt ein Gehäuse 1, in welchem ein erster Innenraum 2 und ein zweiter Innenraum 3 ausgeformt sind. Die Innenräume 2 und 3 sind mittels eines Durchlasses 4 miteinander verbunden. In einer Wandung des Durchlasses 4 sind ein erster Ventilsitz 5 und ein zweiter Ventilsitz 6 ausgeformt.

Im ersten Innenraum 2 und in den zweiten Innenraum 3 ragend ist ein erster Schließkörper 7 aufgenommen, welcher in dichtenden Kontakt mit dem ersten Ventilsitz 5 bringbar ist. Im zweiten Innenraum 3 ist ein zweiter Schließkörper 8 aufgenommen, welcher in dichtenden Kontakt mit dem zweiten Ventilsitz 6 bringbar ist. Der erste Schließkörper 7 besitzt einen Hohlraum 9, der in einer Hubrichtung des Schließkörpers durchsetzt.

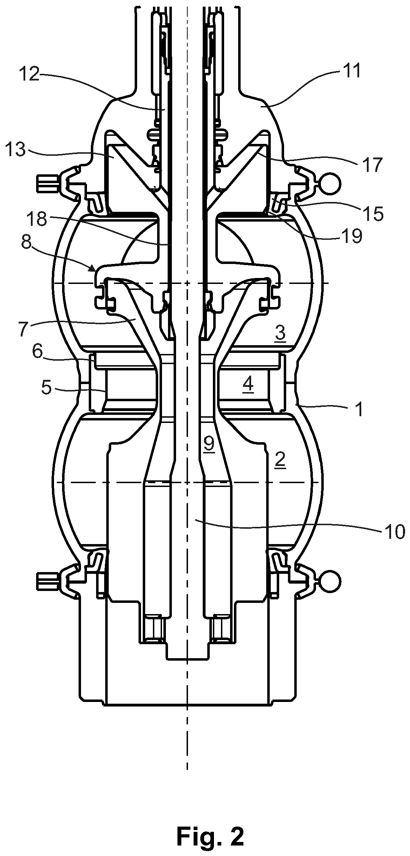

Die Fig. 1 und Fig. 2 zeigen Stellungen der Schließkörper 7 und 8 der Doppelsitzventils, in denen der Hohlraum 9 gegen die Innenräume 2 und 3 abgedichtet ist. In Fig. 1 ist das der Fall, indem beide Schließkörper 7 und 8 in dichtendem Kontakt mit dem jeweils zugeordneten Ventilsitz 5 und 6 stehen. Das Doppelsitzventil befindet sich in einem geschlossenen Zustand, in welchem die Innenräume 2 und 3 voneinander getrennt sind. In Fig. 2 hingegen ist ein Teil des ersten Schließkörpers 7 in einer Ausnehmung des zweiten Schließkörpers 8 dichtend aufgenommen. Der Hohlraum 9 ist mit einer Umgebung des Doppelsitzventils verbunden, so dass Flüssigkeit aus dem Hohlraum 9 in diese Umgebung entweicht. Solche Flüssigkeit kann Leckage durch mangelnden Kontakt von Schließkörper 7 und 8 und zugeordnetem Ventilsitz 5 und 6 sein, beispielsweise bei Einschluss eines Fremdkörpers oder durch Verschleiß einer Dichtung. Es kann sich auch um Flüssigkeit beim Reinigen des Doppelsitzventils handeln.

Eine Stange 10 durchsetzt den Hohlraum 9 innerhalb des ersten Schließkörpers 7. Die Stange 10 erstreckt sich durch den zweiten Innenraum 3 und durchsetzt dabei den zweiten Schließkörper 8. Sie ist mit einer nicht gezeigten Verstelleinrichtung verbunden, die eine Bewegung entlang einer Längsachse der Stange 10 bewirkt. Die Verstelleinrichtung kann beispielsweise druckmittelbetrieben ausgeführt sein. Bekannt sind hier insbesondere pneumatische Systeme. Oft wird der zweite Schließkörper 8 für den Haupthub passiv ausgeführt, indem er vom ersten Schließkörper 7 bei dessen Bewegung in die Offenstellung mitgenommen wird. Die Verstelleinrichtung ist zum einzelnen Ansteuern der Schließkörper 7 und 8 eingerichtet, um den einen der Schließkörper in eine unter Bildung eines kleinen Spaltes zwischen Schließkörper 7 und 8 und Ventilsitz 5 und 6 angelüftete Position zu bringen während der jeweils andere Schließkörper 7 und 8 in Schließstellung bleibt, also sich weiterhin in dichtendem Kontakt mit dem Ventilsitz 5 und 6 steht. Durch den Spalt tritt Reinigungsflüssigkeit in den Hohlraum 9 und wird durch diesen abgeführt.

Auf ihrer der Verstelleinrichtung zugewandten Seite besitzt das Doppelsitzventil einen Gehäusedeckel 11, der den zweiten Innenraum 3 von der Umgebung des Doppelsitzventils abtrennt. Die Stange 10 und eine diese umgebende Hohlstange 12 sind durch den Gehäusedeckel 11 hindurchgeführt und verbinden die Schließkörper 7 und 8 mit der Verstelleinrichtung.

Der zweite Schließkörper 8 besitzt einen in Richtung des Gehäusedeckels 11 ausgerichteten Schließkörperabschnitt 13 mit erweitertem Durchmesser, woraus eine etwa hantelartige Form entsteht. Der Schließkörperabschnitt 13 besitzt eine Gleitfläche 14, die zylindrisch um die Achse der Bewegung und zur Hohlstange 12 ausgeführt sein kann. Mit dieser Gleitfläche 14 steht eine im Gehäuse 1 aufgenommene Dichtung 15 in gleitendem und dichtendem Kontakt. Die Dichtung 15 kann zwischen Gehäuse 1 und Gehäusedeckel 11 geklemmt sein.

Im Gehäuse 1, bevorzugt im Gehäusedeckel 11, ist ein Spülraum 16 ausgeformt, in welchem der Schließkörperabschnitt 13 bei gleichzeitigem Freilegen der Dichtung 15 aufnehmbar ist. Der Begriff Freilegen umfasst die Ausbildung eines Spaltes zwischen der Dichtung 15 und dem Schließkörperabschnitt 13. Bevorzugt besitzt der Spülraum 16 ausreichende Abmessungen, den Schließkörperabschnitt 13 vollständig aufzunehmen und unter Bildung von wenigstens einem Spalt zu umschließen.

In Fig. 1, welche die Schließstellung des Doppelsitzventils zeigt, befindet sich der Schließkörperabschnitt 13 soweit außerhalb des Spülraums 16, dass nur noch ein kleiner Teil der Gleitfläche 14 in dichtendem Kontakt mit der Dichtung 15 steht. In der Stellung gemäß Fig. 2 ist der Schließkörperabschnitt 13 in den Spülraum 16 zurückgezogen und Dichtung 15 und Gleitfläche 14 stehen nicht länger in dichtendem Kontakt. Statt des Kontakts ist ein Spalt zwischen Dichtung 15 und Gleitfläche 14 ausgebildet, durch welchen Reinigungsflüssigkeit strömen kann, die die Dichtung 15 und die Gleitfläche 14 reinigt.

An die Gleitfläche 14 schließt eine am Schließkörperabschnitt 13 ausgeformte Schräge 17 an, die wie ein Trichter wirkt und in einen Ablauf 18 ausmündet, der als ein Spalt zwischen der Stange 10 und zweiten Schließkörper 8 ausgebildet ist. Dieser Ablauf 18 schafft eine Fluidverbindung zwischen dem Spülraum 16 und dem Hohlraum 9.

Im Reinigungsschritt strömt Reinigungsflüssigkeit durch den Spalt zwischen Dichtung 15 und Schließkörperabschnitt 13 ein, strömt durch den Spalt zwischen Gleitfläche 14 und einer inneren Wandung des Spülraums 16. Sie strömt dann an der unmittelbar an die Gleitfläche 14 anschließende Schräge 17. Deren Trichterwirkung leitet die Flüssigkeit zum Ablauf 18, aus dem die Flüssigkeit dann in den Hohlraum 9 gelangt und durch diesen das Doppelsitzventil verlässt.

Durch die beschriebene Gestaltung besitzt das Doppelsitzventil verbesserte hygienische Eigenschaften am Schließkörperabschnitt 13, da dieser in der in den Spülraum 16 zurückgezogenen Stellung von Reinigungsflüssigkeit umspülbar ist, wobei gleichzeitig auch die Dichtung 15 gereinigt wird.

Eine weitere Verbesserung lässt sich erzielen, indem der Schließkörperabschnitt 13 eine Abdrehung 19 besitzt. Diese schließt in Richtung des zweiten Innenraums 3 an die Gleitfläche 14 an und bildet mit der Dichtung 15 in der Reinigungsstellung des Schließkörperabschnitts 13 einen Spalt mit verbesserter Reinigungswirkung aus.

Eine zusätzliche Verbesserung der hygienischen Eigenschaften bewirkt ein Sprühdüsenkörper 20. Dieser ist im Spülraum 16 die Hohlstange 12 umgebend angeordnet und so ausgeführt, dass möglichst weite Teile der Wandflächen des Spülraum 16 und des Schließkörperabschnitts 13, beispielsweise die Schräge 17 mit Reinigungsmittel benetzt wird.

Der Gehäusedeckel 11 kann einen Einlass für Spülmittel und/oder Dampf umfassen, welcher mit dem Sprühdüsenkörper 20 fluidverbunden sein kann. Dies verbessert zusätzlich die Reinigbarkeit und somit die hygienischen Eigenschaften des Doppelsitzventils.

Die dem zweiten Innenraum 3 zugewandte Unterseite 21 des Schließkörperabschnitts 13 kann vorteilhaft druckausgleichend ausgeführt sein. Gemeint ist ein Ausgleich zwischen den Kräften, die von einem unter Druck stehenden Fluid im zweiten Innenraum 3 auf den Schließabschnitt 22 in eine erste Richtung und den Schließkörperabschnitt 13 in die zur ersten Richtung entgegengesetzte Richtung ausgeübt werden. Der Ausgleich erfolgt durch ein zur Größe des Schließabschnitts 22 passenden Wahl der Oberflächengröße der Unterseite 21. Die Unterseite 21 kann vorteilhaft als nahezu waagrechte Fläche ausgeführt sein, deren Flächennormale parallel zur Hubrichtung steht. Vorteilhaft ist sie um wenige Grad derart geneigt, dass sich ein Konus ergibt, entlang dessen Oberfläche Flüssigkeit zur Mitte, in Richtung der Stange 10, hin abläuft.

Der zweite Schließkörper 8 kann einteilig ausgeführt sein. Dies verbessert die hygienischen Eigenschaften, da auf Schnittstellen zwischen den Abschnitten, insbesondere den produktberührten Abschnitten Schließabschnitt 22 und Schließkörperabschnitt 13 im zweiten Innenraum 3 verzichtet wird.

Die an dem Beispiel eines Doppelsitzventils gezeigten Maßnahme zur hygienischen Verbesserung sind auch in anderen Ventilen anwendbar. Voraussetzung ist, dass die Reinigungsflüssigkeit aus dem Spülraum 16 ableitbar ist. Dies kann beispielsweise bei einem Leckageraum mit seitlichem Auslass zwischen den Schließkörpern erfolgen.

### Bezugszeichenliste

- 1: Gehäuse
- 2: erster Innenraum
- 3: zweiter Innenraum
- 4: Durchlass
- 5: erster Ventilsitz
- 6: zweiter Ventilsitz
- 7: erster Schließkörper
- 8: zweiter Schließkörper
- 9: Hohlraum
- 10: Stange
- 11: Gehäusedeckel
- 12: Hohlstange
- 13: Schließkörperabschnitt
- 14: Gleitfläche
- 15: Dichtung
- 16: Spülraum
- 17: Schräge
- 18: Ablauf
- 19: Abdrehung
- 20: Sprühdüsenkörper
- 21: Unterseite
- 22: Schließabschnitt

## Patentansprüche

1. Doppelsitzventil mit einem Gehäuse (1), mit einem ersten Innenraum (2) und einem zweiten Innenraum (3), einem die Innenräume (2, 3) verbindenden Durchlass (4), in welchem ein erster Ventilsitz (5) und ein zweiter Ventilsitz (6) angeordnet sind, einem einen Hohlraum (9) aufweisenden ersten Schließkörper (7), welcher an einer Stange (10) befestigt ist, und mit einem zweiten Schließkörper (8), welcher von der Stange durchsetzt ist, und welcher mit dem ersten Schließkörper (7) in dichtenden Kontakt bringbar ist, in welchem Kontakt der Hohlraum (9) gegen den zweiten Innenraum (3) abgedichtet ist, und mit einem Schließkörperabschnitt (13), welcher am zweiten Schließkörper (8) angeordnet ist und mit einer im Gehäuse (1) aufgenommenen Dichtung (15) zusammenwirkt, wobei ein Spülraum (16) und eine mit dem Spülraum 16) zusammenwirkende Hygienestruktur vorgesehen sind und der zweite Schließkörper (8) in eine Stellung bringbar ist, in welcher der Schließkörperabschnitt (13) aus dem zweiten Innenraum (3) in den Spülraum (16) zurückgezogen und die Dichtung (15) freigelegt ist, wobei der Schließkörperabschnitt (13) eine Gleitfläche (14) umfasst, welche mit der Dichtung (15) in gleitendem und dichtendem Kontakt steht, und wobei die Hygienestruktur eine Kontur umfasst, **dadurch gekennzeichnet, dass** die Kontur eine Schräge (17) umfasst, welche an die Gleitfläche (14) anschließt und wie ein Trichter wirkt.

2. Doppelsitzventil nach Anspruch 1, **dadurch gekennzeichnet, dass** die Hygienestruktur weiterhin wenigstens eines umfasst von Abdrehung (19) oder Sprühdüsenkörper (20).

3. Doppelsitzventil nach Anspruch 2, **dadurch gekennzeichnet, dass** die Abdrehung (19 am Schließkörperabschnitt angeordnet ist, in Richtung des zweiten Innenraums (3) an die Gleitfläche (14) anschließt und mit der Dichtung (15) in einer Reinigungsstellung des Schließkörperabschnitts (13) einen Spalt ausbildet.

4. Doppelsitzventil nach einem der vorhergehenden Ansprüche, **dadurch gekennzeichnet, dass** die Schräge (17) in einen Ablauf (18) ausmündet, der als Spalt zwischen der Stange (10) und dem zweiten Schließkörper (8) ausgebildet ist.

5. Doppelsitzventil nach einem der vorhergehenden Ansprüche, **dadurch gekennzeichnet, dass** ein Gehäusedeckel (11) vorgesehen ist, der den zweiten Innenraum (3) von einer Umgebung des Doppelsitzventils abtrennt und in welchem der Spülraum (16) ausgeformt ist, in dem der Schließkörperabschnitt bei gleichzeitigem Freilegen der Dichtung (15) aufnehmbar ist.

6. Doppelsitzventil nach Anspruch 5, **dadurch gekennzeichnet, dass** der Sprühdüsenkörper (20) im Spülraum (16) die Hohlstange (12) umgebend angeordnet ist.

7. Doppelsitzventil nach Anspruch 5 oder 6, **dadurch gekennzeichnet, dass** der Spülraum (16) ausreichende Abmessungen besitzt, den Schließkörperabschnitt (13) vollständig aufzunehmen und unter Bildung von wenigstens einem Spalt zu umschließen.

8. Doppelsitzventil nach einem der vorhergehenden Ansprüche, **dadurch gekennzeichnet, dass** eine Flächennormale einer Unterseite (21) des Schließkörperabschnitts (13) um wenige Grad zur Hubrichtung geneigt ist, so dass sich ein Konus ergibt, entlang dessen Oberfläche Flüssigkeit zur Mitte hin abläuft.

## Claims

1. A double seat valve having a housing (1), having a first interior space (2) and a second interior space (3), a passage (4) which connects the interior spaces (2, 3) and in which a first valve seat (5) and a second valve seat (6) are arranged, a first closing body (7) which comprises a cavity (9) and which is fastened to a rod (10), and having a second closing body (8) through which the rod passes and which can be brought into sealing contact with the first closing body (7), in which contact the cavity (9) is sealed off with respect to the second interior space (3), and having a closing body portion (13) which is arranged on the second closing body (8) and which cooperates with a seal (15) received in the housing (1), wherein a flushing chamber (16) and a hygiene structure that cooperates with the flushing chamber (16) are provided and the second closing body (8) can be brought into a position in which the closing body portion (13) is withdrawn from the second interior space (3) into the flushing chamber (16) and the seal (15) is exposed, wherein the closing body portion (13) comprises a sliding surface (14) which is in sliding and sealing contact with the seal (15), and wherein the hygiene structure comprises a contour, **characterized in that** the contour comprises a slope (17) which adjoins the sliding surface (14) and acts like a funnel.

2. The double seat valve according to claim 1, **characterized in that** the hygiene structure further comprises at least one of a twist-off point (19) or spray nozzle body (20).

3. The double seat valve according to claim 2, **characterized in that** the twist-off point (19) is arranged on the closing body portion, adjoins the sliding surface (14) in the direction of the second interior space (3) and forms a gap with the seal (15) in a cleaning position of the closing body portion (13).

4. The double seat valve according to any one of the preceding claims, **characterized in that** the slope (17) opens out in a drain (18) which is formed as a gap between the rod (10) and the second closing body (8).

5. The double seat valve according to any one of the preceding claims, **characterized in that** a housing cover (11) is provided which separates the second interior (3) from surroundings of the double seat valve and in which the flushing chamber (16) is formed, in which the closing body portion can be received while simultaneously exposing the seal (15).

6. The double seat valve according to claim 5, **characterized in that** the spray nozzle body (20) is arranged in the flushing chamber (16) so as to surround the hollow rod (12).

7. The double seat valve according to claim 5 or 6, **characterized in that** the flushing chamber (16) has sufficient dimensions for fully receiving the closing body portion (13) and for enclosing same with the formation of at least one gap.

8. The double seat valve according to any one of the preceding claims, **characterized in that** a surface normal of an underside (21) of the closing body portion (13) is inclined by a few degrees with respect to the lift direction, so as to produce a cone along the surface of which liquid flows off toward the center.

## Revendications

1. Soupape à double siège avec un boîtier (1), comprenant un premier espace intérieur (2) et un deuxième espace intérieur (3), un passage (4) reliant les espaces intérieurs (2, 3), dans lequel sont disposés un premier siège de soupape (5) et un deuxième siège de soupape (6), un premier corps de fermeture (7) présentant un espace creux (9), lequel est fixé à une barre (10), et comprenant un deuxième corps de fermeture (8), lequel est traversé par la barre, et lequel peut être mis en contact étanche avec le premier corps de fermeture (7), l'espace creux (9) étant rendu étanche par rapport au deuxième espace intérieur (3) par ledit contact, et comprenant une section de corps de fermeture (13) disposée sur le deuxième corps de fermeture (8) et interagissant avec un joint d'étanchéité (15) reçu dans le boîtier (1), dans laquelle il est prévu un espace de rinçage (16) ainsi qu'une structure hygiénique interagissant avec l'espace de rinçage (16) et le deuxième corps de fermeture (8) peut être mis dans une position dans laquelle la section de corps de fermeture (13) est retirée du deuxième espace intérieur (3) vers l'espace de rinçage (16) et le joint d'étanchéité (15) est exposé, dans laquelle la section de corps de fermeture (13) comporte une surface de glissement (14) en contact glissant et étanche avec le joint d'étanchéité (15), et dans laquelle la structure hygiénique comporte un contour, **caractérisée en ce que** le contour comporte un biseau (17) prolongeant la surface de glissement (14) et agissant comme un entonnoir.

2. Soupape à double siège selon la revendication 1, **caractérisée en ce que** la structure hygiénique comporte en outre au moins l'un parmi un dispositif d'arrêt (19) ou un corps de buse de pulvérisation (20).

3. Soupape à double siège selon la revendication 2, **caractérisée en ce que** le dispositif d'arrêt (19) est disposé sur la section de corps de fermeture, prolonge la surface de glissement (14) en direction du deuxième espace intérieur (3) et forme une fente avec le joint d'étanchéité (15) dans une position de nettoyage de la section de corps de fermeture (13).

4. Soupape à double siège selon l'une des revendications précédentes, **caractérisée en ce que** le biseau (17) débouche sur une évacuation (18), laquelle est formée comme une fente entre la barre (10) et le deuxième corps de fermeture (8).

5. Soupape à double siège selon l'une des revendications précédentes, **caractérisée en ce qu'**il est prévu un couvercle de boîtier (11), lequel sépare le deuxième espace intérieur (3) d'un environnement de la soupape à double siège et dans lequel est formé l'espace de rinçage (16), dans lequel la section de corps de fermeture peut être reçue lors de l'exposition simultanée du joint d'étanchéité (15).

6. Soupape à double siège selon la revendication 5, **caractérisée en ce que** le corps de buse de pulvérisation (20) est disposé dans l'espace de rinçage (16) de manière à entourer la barre creuse (12).

7. Soupape à double siège selon la revendication 5 ou 6, **caractérisée en ce que** l'espace de rinçage (16) possède des dimensions suffisantes pour accueillir entièrement la section de corps de fermeture (13) et pour entourer celle-ci en formant au moins une fente.

8. Soupape à double siège selon l'une des revendications précédentes, **caractérisée en ce qu'**une normale de surface d'un côté inférieur (21) de la section de corps de fermeture (13) est inclinée de quelques degrés par rapport à la direction de levage, de manière à former un cône, le long de la surface duquel du liquide s'écoule vers le centre.
